# EUROPÄISCHE PATENTSCHRIFT

(11) **EP 3 681 618 B1**
(45) Veröffentlichungstag und Bekanntmachung des Hinweises auf die Patenterteilung: **20.04.2022**
(21) Anmeldenummer: 18769142.3
(22) Anmeldetag: 11.09.2018
(51) Int. Cl.: B01D 63/02, B01D 65/08, B01D 61/02, B01D 61/14

(54) **VERFAHREN ZUM VERARBEITEN EINER PROTEINHALTIGEN SUSPENSION ODER PROTEINHALTIGEN LÖSUNG**
METHOD FOR PROCESSING A PROTEIN-CONTAINING SUSPENSION OR PROTEIN-CONTAINING SOLUTION
PROCÉDÉ DE TRAITEMENT D'UNE SUSPENSION CONTENANT DES PROTÉINES OU D'UNE SOLUTION CONTENANT DES PROTÉINES

(30) Priorität: 12.09.2017 DE 102017216030
(43) Veröffentlichungstag der Anmeldung: 22.07.2020
(73) Patentinhaber: Fresenius Medical Care Deutschland GmbH, 61352 Bad Homburg (DE)
(72) Erfinder: SMYSLOVA, Liubov, 61352 Bad Homburg (DE); FEURLE, Juliane, 60433 Frankfurt (DE)
(74) Vertreter: Ricker, Mathias
(86) Internationale Anmeldenummer: PCT/EP2018/074410
(87) Internationale Veröffentlichungsnummer: WO 2019/052989

(56) Entgegenhaltungen:
- EP-A1- 0 483 143
- EP-A1- 2 846 893
- EP-B1- 0 483 143
- EP-B1- 2 846 893
- WO-A2-2006/127579
- WO-A2-2008/110172
- US-A1- 2010 193 424

## Beschreibung

### THEMA DER ERFINDUNG

Die Erfindung betrifft ein Verfahren zur Verarbeitung von proteinhaltigen Suspensionen oder Lösungen enthaltend proteinhaltige Partikel oder gelöste proteinhaltige Substanz, die in einer Trägerflüssigkeit dispergiert sind. Weiterhin betrifft die Erfindung die Verwendung des Verfahrens in der Anreicherung und Aufreinigung von proteinhaltigen Partikeln oder gelöster proteinhaltiger Substanz.

### HINTERGRUND DER ERFINDUNG

Im Umwelt- und Qualitätsmanagement, insbesondere in der Wasseraufbereitung, und in der Flüssigkeitsverarbeitung von biologischen Flüssigkeiten in der Medizintechnik besteht oftmals das Erfordernis, dispergierte oder gelöste Bestandteile in wässrigen Systemen zu identifizieren, um sie weiteren Verarbeitungsschritten und Analysen zugänglich zu machen. Dafür ist es oftmals notwendig, derartige Bestandteile aus großer Verdünnung aufzureinigen und anzureichern. In diesem Zusammenhang werden Filtrationsverfahren angewandt, um derartige Bestandteile zu isolieren und/oder zu reinigen. In diesem Zusammenhang besteht z.B. besonders in der kommunalen oder der klinischen Wasserversorgung das Bedürfnis, Mikroorganismen wie Viren, Bakterien, oder Protozoen, Pathogene, Zellen, Zellfragmente, Pyrogene oder Endotoxine oder andere proteinhaltige Partikel, die in hoher Verdünnung in Wasserressourcen dispergiert oder gelöst sein können, identifizierbar zu machen und hinsichtlich ihres Gesundheitsrisikos zu bewerten.

Die Anreicherung von Bestandteilen aus verdünnten wässrigen Systemen erfordert die Filtration von großen Flüssigkeitsvolumina. Hierbei hat sich die Filtration an Hohlfasermembranen gegenüber der Filtration an anderen Membranen als überlegen herausgestellt. Diesbezüglich sind in den zurückliegenden Jahren diverse Filtrationsverfahren zur Anreicherung und Aufreinigung von Bakterien, Viren und anderen proteinhaltigen Substanzen entwickelt worden. Es kommen hier insbesondere das "Tangential-Flow"- und das "Dead End"-Filtrationsverfahren zur Anwendung.

Gemäß der "Tangential-Flow"-Filtration erfolgt die Filtration an einer Membran, bei der die zu filtrierende Flüssigkeit innerhalb eines Filtermoduls entlang der Membranoberfläche geströmt wird. Ein Teil der Flüssigkeit tritt dabei innerhalb des Filtermoduls durch die Membranwand auf eine gegenüberliegende Seite der Membranwand über. Ein weiterer Teil der Flüssigkeit verbleibt diesseits der Membranwand und wird als sogenanntes Retentat aus dem Filter abgeleitet. Das Retentat kann rezirkuliert und dem Filter erneut zugeführt werden, so dass Bestandteile der zu filtrierenden Flüssigkeit, die von der Membranwand zurückgehalten werden, im Retentat angereichert werden.

Das "Tangential-Flow"-Verfahren wird insbesondere an Hohlfasermembranfiltern angewandt. Über einen Flüssigkeitszugang am Hohlfasermembranfilter wird beispielsweise Flüssigkeit auf die Lumenseite der Hohlfasermembranen gefördert, diese werden durchströmt und über einen zweiten Flüssigkeitszugang aus dem Hohlfasermembranfilter abgeleitet und rezirkuliert. Filtrat gelangt über die Membranwand der Hohlfasermembranen in den Faserzwischenraum des Hohlfasermembranfilters. Membrangängige Bestandteile der zu filtrierenden Flüssigkeit werden mit dem Filtrat abgeleitet, so dass gleichzeitig eine Aufreinigung der im Retentat zurückgehaltenen Bestandteile erfolgt. Die Rezirkulation kann solange fortgeführt werden, bis eine ausreichende Anreicherung oder Aufreinigung der Bestandteile im Retentat erfolgt ist. Sofern vorgesehen ist, große Volumina Flüssigkeit zu filtrieren, können sich relativ langandauernde Zirkulationsverfahren ergeben. Es wirkt sich dabei nachteilig aus, dass sich Ablagerungen aus der zu filtrierenden Flüssigkeit auf der Membranoberfläche bilden. Diese Ablagerungen verhindern eine effektive Filtration und führen im ungünstigen Fall zu einer Verblockung der Membranporen, so dass eine Filtration verschlechtert wird und eine effektive Anreicherung und Aufreinigung der zu isolierenden Bestandteile verhindert wird. Zudem ist es beim "Tangential-Flow"-Verfahren sinnvoll, dass die gesamte Probe vorgängig in einem Probenbehältnis vorgelegt wird, so dass eine Rezirkulation des Retentats und eine Anreicherung der Bestandteile im Retentat erfolgen kann.

Beim "Dead-End"-Filtrationsverfahren wird Flüssigkeit in ein Filtermodul eingeleitet und über einen aufgebauten Druckgradienten über die Membranwand geleitet. In der Regel wird das "Dead-End"-Verfahren an Hohlfasermembranfiltern durchgeführt, indem Flüssigkeit über einen Flüssigkeitszugang in den Hohlfasermembranfilter auf die Lumenseite der Hohlfasermembranen eingeleitet wird. Die Enden der Hohlfasermembranen sind dabei verschlossen oder blockiert, so dass keine Flüssigkeit über die Enden der Hohlfasermembranen austreten kann. Insbesondere wird häufig der zweite Flüssigkeitszugang am anderen Ende des Hohlfasermembranfilters blockiert, so dass sämtliche zu filtrierende Flüssigkeit die Membranwand passiert und als Filtrat abgeleitet werden kann. Die von der Membran zurückgehaltenen Bestandteile der zu filtrierenden Flüssigkeit sammeln sich im Filter an, insbesondere in den Lumen der Hohlfasermembranen und werden in einem weiteren Förderschritt durch Rückspülung aus dem Filter zurückgewonnen. Es ist somit auch möglich, die Probe zunächst im Filter zu sammeln und für eine spätere Verwendung, z.B. der Rückgewinnung durch ein Rückspülverfahren, aufzubewahren.

Das "Dead-End"-Verfahren ist hinsichtlich des Zeitaufwands gegenüber dem "Tangential-Flow"-Verfahren überlegen. Nachteilig ist allerdings, dass die Membranen zur Verblockung neigen. Proteinhaltige Partikel oder gelöste proteinhaltige Substanz tendieren dazu, von der Membranwand adsorbiert zu werden und sich auf der Oberfläche und in den Poren der Membranwand abzulagern. Derartige Verblockungen können eine effektive Rückgewinnung der Proteine verhindern und verschlechtern die Filtration. Um der Verblockung entgegenzuwirken, ist bekannt, Hohlfasermembranfilter mit Rinderserum oder Natriumpolyphosphat (NAPP) oder Natriumdiphosphat vorzubehandeln. Solche Verfahren sind jedoch nachteilig, da sie zeitaufwendig sind und die Filter gegebenenfalls mikrobiell kontaminieren können. Weiterhin ist bekannt, die Adsorption der zu untersuchenden proteinhaltigen Partikel oder der gelösten proteinhaltigen Substanz durch Additive, wie NaPP oder auch TWEEN 80 als oberflächenaktive Substanzen während der Filtration zu reduzieren. Als nachteilig ist dabei anzusehen, dass die zu gewinnenden Proteine durch die Additive verunreinigt werden. Zusätzlich können Additive auch zur Rückspülflüssigkeit zugesetzt werden, um eine Desorption der proteinhaltigen Partikel oder der gelösten proteinhaltigen Substanz zu bewirken. Allerdings ist auch dieser Zusatz mit einer Verunreinigung der angereicherten proteinhaltigen Partikel oder gelösten proteinhaltigen Substanz verbunden.

Die US 9,446,354 offenbart ein Verfahren zur Filtration von biologischen Flüssigkeiten mit Rückspülschritten während des Filtrationsverfahrens. Dabei wird in einem "Dead-End"-Filtrationsverfahren eine aus einem Bioreaktor erhaltene proteinhaltige Flüssigkeit angereichert. Die Flüssigkeit wird mit Hilfe einer Membranpumpe gefördert, die signifikante Druckstöße verursacht. Es wird dabei während eines Pumpenzyklus eine Rückfiltration durchgeführt, so dass Proteinablagerungen in der Membran desorbiert werden. Dadurch kann eine größere Menge zurückgehaltener Proteine in dem Filter aufgenommen werden, ohne dass durch ein Verblocken der Membran ein zu hoher transmembraner Druckgradient verursacht wird. Die Rückgewinnung der zurückgehaltenen Proteine wird in der US 9,446,354 nicht beschrieben.

Die JP2016116465 beschreibt eine Methode zur Gewinnung eines Zell-Konzentrats mit verringerter Verunreinigung. Zur Anreicherung der Zellen in der ZellSuspension wird die Zellsuspension, ausgehend von einem Reservoir in einem "Tangential-Flow"-Verfahren, durch die Lumenseite eines Hohlfasermembranfilters zirkuliert. Filtrat wird über die Membranwand in den Filtratraum permeiert. Zur Aufreinigung wird dem Reservoir, das die Zellsuspension bevorratet, sukzessive eine Spülflüssigkeit zugegeben. Eine "Dead-End"-Filtration wird in diesem Verfahren nicht erwähnt.

WO 2006/127579 A2 offenbart die Filtration von proteinhaltigen Flüssigkeiten, z.B. in der Milchverarbeitung bei der eine Membran eines ersten Membransystems durch eine Kombination von "forward flushing" und "backward flushing" gereinigt wird. Ein zweites Membransystem schaltet vom "Dead-End-Modus" in den "Cross-Flow-Modus" wenn sich die Durchlässigkeit der Membran verringert.

EP 2 846 893 A1 offenbart ein möglichst mobiles Membranmodul für die dezentrale Wasserreinigung, wobei durch Kombination von "Back-Flush" und "Forward-Flush" eine besonders effektive Loslösung von Ablagerungen auf der Hohlfasermembranoberfläche ermöglicht werden kann.

US 2010/193424 A1 offenbaren einen Apparat umfassend einen Hohlfasermembranfilter zur Filtration von kontaminiertem Wasser durch Kombination von "Backwash" und "Forward-Flush" Filtration.

WO 2008/110172 A2 offenbart eine Methode zu Filtration von Mikroben aus einer Flüssigkeit, wobei die Methode die Kombination von "Backflush" und "Forwardflush Filtration und die Zugabe einer antimikrobiellen Substanz umfasst, um eine Biofilmbildung zu vermeiden.

EP 0 483 143 A1 beschreibt eine Methode zur Durchführung durch (a) Bereitstellen einer Ligat-enthaltenden Beschickungsflüssigkeit wobei die Beschickungsflüssigkeit tangential über eine Außenfläche einer Membran geleitet wird wodurch das in der Beschickungsflüssigkeit vorhandene Ligat an einen Liganden der Membran bindet, (b) Waschen der Membran mit einer Pufferlösung, (c) Bereitstellen einer Elutionslösung um eine Dissoziation der gebildeten Ligat-Liganden-Bindungen zu bewirken, (d) Waschen der Membran mit einer Pufferlösung, und (e) Abtrennung des Ligats in gereinigter Form aus der Elutionslösung.

Die im Stand der Technik beschriebenen Verfahren sind hinsichtlich der einfachen Handhabung und der Aufreinigungs- und Anreicherungsleistung von proteinhaltigen Partikeln oder von gelöster proteinhaltiger Substanz aus proteinhaltigen Suspensionen oder Lösungen verbesserungswürdig. Insbesondere sind die Rückgewinnungsraten der beschriebenen Verfahren verbesserungswürdig. Es bestand daher das Bedürfnis, ein verbessertes Verfahren zur Verarbeitung von Zellsuspensionen bereitzustellen, das die beschriebenen Nachteile überwindet.

### AUFGABE DER ERFINDUNG

In einem ersten Aspekt der Erfindung bestand daher die Aufgabe, ein Verfahren zur Verarbeitung für proteinhaltige Suspensionen oder Lösungen bereitzustellen, das mit geringem Aufwand durchgeführt werden kann und das eine hohe Rückgewinnung der proteinhaltigen Partikel oder der gelösten proteinhaltigen Substanz gewährleistet.

### ZUSAMMENFASSUNG DER ERFINDUNG

Erfindungsgemäß wird in einem ersten Aspekt der Erfindung die Aufgabe durch ein Verfahren zur Verarbeitung einer proteinhaltigen Suspension oder Lösung nach Anspruch 1 gelöst. Die Unteransprüche 2 bis 13 stellen bevorzugte Ausführungsformen des ersten Aspekts der Erfindung dar.

In einem zweiten Aspekt wird die Aufgabe durch die Verwendung des Verfahrens nach Anspruch 1 bis 13 zur Aufreinigung von proteinhaltigen Partikeln oder gelöster proteinhaltiger Substanz in einer Trägerflüssigkeit gemäß Anspruch 14 gelöst.

In einem dritten Aspekt wird die Aufgabe durch die Verwendung des Verfahrens nach einem der Ansprüche 1 bis 13 zur Anreicherung von proteinhaltigen Partikeln oder gelöster proteinhaltiger Substanz in einer Trägerflüssigkeit gemäß Anspruch 15 gelöst.

### DETAILLIERTE BESCHREIBUNG DER ERFINDUNG

Ein erster Aspekt der Erfindung betrifft ein Verfahren zur Verarbeitung von proteinhaltigen Suspensionen oder Lösungen umfassend die Schritte:
- Bereitstellen eines Filtermoduls, aufweisend einen Innenraum, der durch zumindest eine poröse Membranwand in einen Retentatraum und einen Filtratraum unterteilt ist, wobei der Retentatraum zumindest einen ersten und einen zweiten Flüssigkeitszugang aufweist und der Filtratraum zumindest einen Flüssigkeitszugang aufweist,
- Bereitstellen zumindest einer Quelle einer proteinhaltigen Suspension oder Lösung enthaltend in einer Trägerflüssigkeit suspendierte proteinhaltige Partikel oder gelöste proteinhaltige Substanz, wobei die Quelle der proteinhaltigen Suspension oder Lösung über Flüssigkeitsleitungen zumindest mit dem ersten Flüssigkeitszugang am Retentatraum verbindbar ist,
- Bereitstellen einer oder mehrerer Quellen einer Spülflüssigkeit, wobei die eine oder mehrere Quellen der Spülflüssigkeit zumindest mit dem ersten oder zweiten Flüssigkeitszugang am Retentatraum und mit dem zumindest einen Flüssigkeitszugang am Filtratraum verbindbar ist,
- Bereitstellen von zumindest einem Pumpenmittel, zum Fördern von proteinhaltiger Suspension oder Lösung und Spülflüssigkeit durch die Flüssigkeitsleitungen,
- Fördern von proteinhaltiger Suspension oder Lösung in einem ersten Förderschritt von der Quelle der proteinhaltigen Suspension oder Lösung in den Retentatraum des Filtermoduls, wobei die Quelle der proteinhaltigen Suspension oder Lösung über Flüssigkeitsleitungen (151, 154) zumindest mit dem ersten Flüssigkeitszugang (101A) am Retentatraum verbunden ist,
- Überleiten von Flüssigkeit der proteinhaltigen Suspension oder Lösung über die Membranwand in den Filtratraum,
- gegebenenfalls Ableiten der im Filtratraum erhaltenen Flüssigkeit über den zumindest einen Flüssigkeitszugang des Filtratraums,
   dadurch gekennzeichnet,
   dass in einem zweiten Förderschritt Spülflüssigkeit von der einen oder den mehreren Quellen der Spülflüssigkeit in den Filtratraum und in den Retentatraum gefördert wird und proteinhaltige Partikel oder gelöste proteinhaltige Substanz enthaltende Rückspülflüssigkeit aus dem Retentatraum über den zumindest zweiten Flüssigkeitszugang (101B) abgeleitet wird, wobei die eine oder die mehreren Quellen der Spülflüssigkeit (120, 130) zumindest mit dem ersten oder zweiten Flüssigkeitszugang am Retentatraum (101A) und mit dem zumindest einen Flüssigkeitszugang (102B) am Filtratraum über Flüssigkeitsleitungen (152, 153, 154, 155) verbunden ist und
   dass in dem ersten Förderschritt der zumindest zweite Flüssigkeitszugang (101B) am Retentatraum des Filtermoduls flüssigkeitsdicht blockiert ist.

Das Verfahren weist den Vorteil auf, dass es über die einfache Handhabung einer "Dead-End"-Filtration durchgeführt werden kann. Weiterhin zeichnet sich das beschriebene Verfahren durch eine hohe Rückgewinnungsrate der proteinhaltigen Partikel oder der gelösten proteinhaltigen Substanz aus. Insbesondere eignet sich das Verfahren dazu, Zellen, Pathogene, Viren, Pyrogene, Endotoxine, Mikrovesikel oder weitere proteinhaltige Partikel oder gelöste proteinhaltige Substanz aus hoher Verdünnung, wie z.B. aus Trinkwasser, aufzureinigen und anzureichern, so dass weitere mikrobielle Untersuchungen an den gewonnenen Proben durchgeführt werden können.

Unter dem Begriff "Proteine" werden alle auf Aminosäuren basierenden Makromoleküle verstanden, die in einer Trägerflüssigkeit als Partikel suspendiert oder gelöst werden können und mit einer Membranfiltration aufgereinigt und angereichert werden können. In diesem Zusammenhang wird unter einer *"proteinhaltigen Suspension oder Lösung"* eine Suspension oder Lösung in einer Trägerflüssigkeit verstanden, die Zellen, Proteine, proteinhaltige Pathogene, Viren, Pyrogene, Endotoxine oder Mikrovesikel enthält. Als *"Trägerflüssigkeit"* wird in diesem Zusammenhang insbesondere eine wässrige Flüssigkeit, weiter insbesondere Wasser, verstanden.

Für das erfindungsgemäße Verfahren wird ein Filtermodul mit einer Membran verwendet, dessen Membranbeschaffenheit dadurch ausgezeichnet ist, dass die zu untersuchenden proteinhaltigen Partikel oder die gelöste proteinhaltige Substanz zurückgehalten werden können. Die Porengröße der selektiven Schicht der Membran steht mit der Zurückhaltung der Proteine im Zusammenhang. Sollen beispielsweise Viren abgetrennt werden, ist die Verwendung einer Membran mit einer Porengröße kleiner 20 nm ratsam. Eine Größe für die Trenneigenschaft einer Membran ist der molekulare Cut-off, der angegeben ist als Molekulargewicht einer Substanz, die gerade sicher abgetrennt werden kann. Der Cut-off wird häufig in kDa angegeben. Der Cut-off eines Filters wird nach EN ISO 8637:2014 mit Hilfe der Siebkoeffizientenmessung bestimmt. Die Membran des Filtermoduls unterteilt den Innenraum des Filtermoduls in zwei Räume. Der erste Raum des Filtermoduls ist für die Rückhaltung der zu filtrierenden proteinhaltigen Suspension oder Lösung vorgesehen. Die Trägerflüssigkeit der proteinhaltigen Suspension oder Lösung kann durch Filtration über die Membranwand hinweg in den zweiten Raum des Filtermoduls gelangen. Nicht filtrierte Flüssigkeit und die Probe verbleiben im ersten Raum des Filtermoduls und werden als *"Retentat'* bezeichnet. Der erste Raum wird daher im Sinne der vorliegenden Anmeldung als *"Retentatraum"* bezeichnet. Die durch den Übergang über die Membranwand in den zweiten Raum des Filtermoduls gelangte Flüssigkeit wird als *"Filtrat'* bezeichnet. Der Raum des Filtermoduls, in dem das Filtrat anfällt, wird entsprechend in der vorliegenden Anmeldung als *"Filtratraum"* bezeichnet.

Das Filtermodul verfügt über mehrere Flüssigkeitszugänge, wobei der Retentatraum zumindest zwei Flüssigkeitszugänge und der Filtratraum zumindest einen Flüssigkeitszugang aufweisen. Im Sinne der vorliegenden Anmeldung wird unter einem *"Flüssigkeitszugang"* ein Anschluss am Filtermodul verstanden, über den Flüssigkeit, insbesondere proteinhaltige Suspension oder Lösung oder Spülflüssigkeit, in das Filtermodul, z.B. entweder in den Retentatraum oder den Filtratraum, eingeleitet werden kann. Ein derart bezeichneter Flüssigkeitszugang eignet sich gleichermaßen auch zum Ableiten von Flüssigkeit, insbesondere zum Ableiten von Filtrat oder Retentat aus dem Filtermodul.

Die proteinhaltige Suspension oder Lösung wird für die Filtration durch eine Quelle für eine proteinhaltige Suspension oder Lösung bereitgestellt. Im Sinne der vorliegenden Anmeldung kann als *"Quelle"* für eine proteinhaltige Suspension oder Lösung ein Reservoir dienen, in dem ein Vorrat der proteinhaltigen Suspension oder Lösung bereitgestellt wird. Als Quelle kann aber auch eine Zufuhr einer proteinhaltigen Suspension oder Lösung dienen, von der kontinuierlich proteinhaltige Suspension oder Lösung zugeführt wird. Insbesondere kann hierunter die Zufuhr von mit proteinhaltigen Partikeln oder gelöster proteinhaltiger Substanz kontaminiertem Trinkwasser aus einer Entnahmestation verstanden werden. Weiterhin kann auch die Gewinnung und Bereitstellung von proteinhaltigen Suspensionen oder Lösungen aus vorgelagerten Verfahren eine Quelle einer proteinhaltigen Suspension oder Lösung im Sinne der vorliegenden Anmeldung darstellen.

Im Weiteren wird für die Verarbeitung der proteinhaltigen Suspension oder Lösung nach dem erfindungsgemäßen Verfahren eine Quelle für eine Spülflüssigkeit bereitgestellt. Die *"Quelle"* der Spülflüssigkeit kann ein Reservoir sein, in der Spülflüssigkeit für die Verwendung in dem erfindungsgemäßen Verfahren bevorratet wird. Als Quelle der Spülflüssigkeit kann aber auch die Zufuhr der Spülflüssigkeit aus einer Entnahmestation verstanden werden. Insbesondere kann die Bereitstellung von Spülflüssigkeit aus einer Zubereitungseinheit, in der eine Spülflüssigkeit aus mehreren Komponenten zubereitet und bereitgestellt wird, als Quelle verstanden werden.

Bei der Spülflüssigkeit kann es sich um eine Flüssigkeit handeln, die dazu dient, die Trägerflüssigkeit der proteinhaltigen Suspension oder Lösung auszutauschen und dabei die proteinhaltigen Partikel oder die proteinhaltige gelöste Substanz von Begleitsubstanzen, wie z.B. Verunreinigungen, die sich in der Trägerflüssigkeit befinden, zu reinigen. Bei der Spülflüssigkeit kann es sich um Wasser handeln. Insbesondere kann die Spülflüssigkeit weitere Zusätze enthalten, die dazu dienen eine Denaturierung der enthaltenen Proteine zu verhindern, sowie weiter schädigende Einflüsse zu minimieren, um zu verhindern, dass die Proteine denaturieren, adsorbieren oder defragmentieren.

Insbesondere kann die Spülflüssigkeit Kochsalz, gegebenenfalls in physiologischer Konzentration, enthalten. Des Weiteren kann die Spülflüssigkeit eine oberflächenaktive Substanz enthalten, beispielsweise TWEEN 80. TWEEN 80 ist ein Tensid der Verbindungsklasse der Polyoxyethylensorbitanmonooleate. Bei einer solchen Zusammensetzung der Spülflüssigkeit ist es vorteilhaft, dass adsorbierte proteinhaltige Partikel oder gelöste proteinhaltige Substanz besonders gut desorbiert werden.

Weiterhin wird nach dem erfindungsgemäßen Verfahren die proteinhaltige Suspension oder Lösung durch zumindest ein Pumpenmittel von der Quelle der proteinhaltigen Suspension oder Lösung über Flüssigkeitsleitungen in den Retentatraum gefördert. Als *"Pumpenmittel"* wird im Sinne der vorliegenden Anmeldung jedes Mittel verstanden, dass durch eine Druckveränderung Flüssigkeiten fördern kann. Für das erfindungsgemäße Verfahren ist insbesondere die Verwendung von Membranpumpen oder peristaltischen Pumpen, insbesondere Schlauchrollenpumpen, wie sie im Bereich der Medizintechnik hinlänglich bekannt sind, vorgesehen. Auch Impellerpumpen können im erfindungsgemäßen Verfahren Verwendung finden. Die Auswahl der geeigneten Pumpe richtet sich auch nach dem Pumpmedium, wobei eine möglichst schonende Pumpmethode für die jeweiligen proteinhaltigen Partikel oder die proteinhaltige gelöste Substanz bevorzugt ist. Weiterhin kann vorgesehen sein, dass Filtrat von dem Filtratraum aus dem Filtermodul durch Pumpenmittel abgeleitet wird. Weiterhin kann vorgesehen sein, dass Spülflüssigkeit in den Filtratraum und in den Retentatraum durch ein Pumpenmittel gefördert wird. Insbesondere kann vorgesehen sein, dass Spülflüssigkeit, proteinhaltige Suspension oder Lösung, Retentat oder Rückspülflüssigkeit mit einem Pumpenmittel gefördert wird. Alternativ kann vorgesehen sein, dass Spülflüssigkeit in den Filtratraum und in den Retentatraum durch mehrere Pumpenmittel gefördert wird. Insbesondere können auch mehrere Pumpenmittel vorgesehen sein, um proteinhaltige Suspensionen oder Lösungen, Spülflüssigkeit, Retentat oder Rückspülflüssigkeit zu fördern.

Die Pumpenmittel können dabei so ausgestaltet sein, dass sie in einer ersten Förderrichtung Spülflüssigkeit und/oder proteinhaltige Suspension oder Lösung von der jeweiligen Quelle zum Filtermodul hinfördern können und in einer zweiten Förderrichtung Retentat oder Rückspülflüssigkeit von dem Filter ableiten.

Für das erfindungsgemäße Verfahren ist vorgesehen, dass die zumindest eine Quelle der proteinhaltigen Suspension oder Lösung mit dem zumindest einen ersten Flüssigkeitszugang des Retentatraums über Flüssigkeitsleitungen verbindbar ist und proteinhaltige Suspension oder Lösung über das zumindest eine Pumpenmittel zum Filtermodul gefördert wird. Als *"Flüssigkeitsleitung"* kann jedwedes Verbindungssystem dienen, das zur Förderung der im erfindungsgemäßen Verfahren vorgesehenen Flüssigkeiten geeignet ist. Insbesondere können flexible Schlauchsysteme als Flüssigkeitsleitung dienen, wie sie in der Medizintechnik, insbesondere in der Dialyse, bekannt sind. Unter *"Schlauchsystemen"* sind in diesem Zusammenhang Vorrichtungen zu verstehen, die aus Schlauchstücken, Konnektoren und anderen Funktionselementen, wie z.B. Zuspritz-/Entnahmeports oder Druckanalyseeinheiten, zusammengesetzt sind und für die Förderung von Flüssigkeiten vorgesehen sind.

Weiterhin ist vorgesehen, dass die eine oder mehrere Quellen der Spülflüssigkeit mit dem zumindest einen ersten Flüssigkeitszugang des Retentatraums über Flüssigkeitsleitungen verbindbar sind und Spülflüssigkeit über zumindest ein Pumpenmittel in den Retentatraum des Filtermoduls gefördert werden kann.

Weiterhin ist vorgesehen, dass die eine oder mehrere Quellen der Spülflüssigkeit mit dem zumindest einen Flüssigkeitszugang am Filtratraum über Flüssigkeitsleitungen verbindbar sind und Spülflüssigkeit über zumindest ein Pumpenmittel in den Filtratraum des Filtermoduls gefördert werden kann.

Gemäß dem erfindungsgemäßen Verfahren sind in einem ersten Förderschritt die Quelle der proteinhaltigen Suspension oder Lösung mit dem ersten Flüssigkeitszugang über eine Flüssigkeitsleitung mit dem Filtermodul verbunden. In einer ersten Förderrichtung wird proteinhaltige Suspension oder Lösung von der Quelle der proteinhaltigen Suspension oder Lösung in den Retentatraum des Filtermoduls gefördert. Ein Teil der Trägerflüssigkeit der proteinhaltigen Suspension oder Lösung tritt dabei in den Filtratraum des Filtermoduls über. Die proteinhaltigen Partikel oder die gelöste proteinhaltige Substanz werden dabei im Retentatraum angereichert und gegebenenfalls aufgereinigt, da ein Teil der Trägerflüssigkeit über die Membranwand als Filtrat abgetrennt wird. Das im Filtratraum anfallende Filtrat kann gegebenenfalls aus dem Filtratraum durch Pumpenmittel abgeleitet und z. B. einem Auffangbehälter zugeführt werden oder verworfen werden.

In einem zweiten Förderschritt ist die eine oder mehrere Quellen der Spülflüssigkeit mit dem zumindest einen Flüssigkeitszugang des Filtratraums über Flüssigkeitsleitungen des Filtermoduls verbunden, wobei weiterhin die eine oder mehrere Quellen der Spülflüssigkeit mit dem ersten oder dem zweiten Flüssigkeitszugang des Retentatraums verbunden ist. Die Spülflüssigkeit wird nun in den Retentatraum und den Filtratraum über das Pumpenmittel gefördert. Die nach dem ersten Förderschritt im Retentatraum angereicherten proteinhaltigen Partikel oder die gelöste proteinhaltige Substanz sind durch die hinzutretende Spülflüssigkeit im zweiten Förderschritt in angereicherter und aufgereinigter Form ableitbar. Die im zweiten Förderschritt die proteinhaltigen Partikel oder gelöste proteinhaltige Substanz enthaltende, aus dem Retentatraum abgeleitete, Flüssigkeit wird als *"Rückspülflüssigkeit"* bezeichnet.

Das Verfahren ist weiter dadurch gekennzeichnet, dass in dem ersten Förderschritt der zweite Flüssigkeitszugang am Retentatraum des Filtermoduls flüssigkeitsdicht blockiert ist. Gemäß dieser Ausführung wird in dem ersten Förderschritt proteinhaltige Suspension oder gelöste proteinhaltige Substanz in den Retentatraum des Filtermoduls eingeleitet. Die flüssigkeitsdichte Blockierung des zweiten Flüssigkeitszugangs am Retentatraum des Filtermoduls bewirkt, dass eine Ableitung der proteinhaltigen Suspension oder Lösung aus dem Retentatraum verhindert wird, so dass sämtliche proteinhaltigen Partikel oder die gelöste proteinhaltige Substanz im Retentatraum angereichert werden. Dadurch wird im ersten Förderschritt die proteinhaltige Suspension oder Lösung gemäß einer "Dead-End"-Filtration verarbeitet. Die "Dead End"-Filtration weist den Vorteil auf, dass proteinhaltige Suspensionen oder Lösungen in großer Verdünnung aufgearbeitet werden können. Zudem ist der Zeitaufwand für die Aufarbeitung der proteinhaltigen Suspensionen oder Lösungen geringer als in der "Tangential-Flow"-Filtration.

Das Verfahren ist weiter dadurch gekennzeichnet, dass in dem ersten Förderschritt proteinhaltige Suspension oder Lösung von der Quelle der proteinhaltigen Suspension oder Lösung über den ersten Flüssigkeitszugang am Filtermodul in den Retentatraum gefördert wird und in dem zweiten Förderschritt Spülflüssigkeit von der einen oder mehreren Quellen der Spülflüssigkeit über den zumindest einen ersten Anschluss in den Retentatraum des Filtermoduls gefördert wird und die die proteinhaltigen Partikel oder die gelöste proteinhaltige Substanz enthaltende Rückspülflüssigkeit über den zweiten Flüssigkeitszugang am Retentatraum abgeleitet wird. Das Fördern der Spülflüssigkeit in den Retentatraum im zweiten Förderschritt erfolgt damit in derselben Förderrichtung wie das Fördern der proteinhaltigen Suspension oder Lösung in den Retentatraum im ersten Förderschritt. Das Ableiten der proteinhaltigen Partikel oder der gelösten proteinhaltigen Substanz mit der Rückspülflüssigkeit über den zweiten Flüssigkeitszugang am Retentatraum des Filtermoduls wird auch als *"Forward-Flushing"* bezeichnet. Das Forward-Flushing zeichnet sich durch eine einfach gestaltbare Rückgewinnung der im Retentatraum zurückgehaltenen, proteinhaltigen Partikel oder der gelösten proteinhaltigen Substanz aus.

In einer weiteren Ausführungsform ist das erfindungsgemäße Verfahren dadurch gekennzeichnet, dass es sich bei dem Filtermodul um einen Hohlfasermembranfilter handelt. Derartige Hohlfasermembranfilter sind im Stand der Technik, insbesondere aus der Wasseraufbereitung, der Dialyse oder der Apherese bekannt. Die im Stand der Technik bekannten Hohlfasermembranfilter weisen bezüglich der Modulgröße eine hohe Membranoberfläche auf und können mit einer hohen Flussrate der zu filtrierenden Flüssigkeiten, in diesem Fall der proteinhaltigen Suspensionen oder Lösungen, betrieben werden. Handelsüblich sind Hohlfasermembranfilter, die zwei Flüssigkeitszugänge am Retentatraum sowie weiterhin zwei Flüssigkeitszugänge am Filtratraum aufweisen. Für das vorliegende erfindungsgemäße Verfahren können derartige Hohlfasermembranfilter verwendet werden. Für die Verwendung der Hohlfasermembranfilter in dem erfindungsgemäßen Verfahren können einzelne Flüssigkeitszugänge flüssigkeitsdicht blockiert werden. Dies sind z.B. gemäß einer Ausführungsform im ersten Förderschritt der zweite Flüssigkeitszugang am Retentatraum und einer von zwei Flüssigkeitszugängen am Filtratraum.

In einer weiteren Ausführungsform ist das erfindungsgemäße Verfahren dadurch gekennzeichnet, dass die Lumenseite der Hohlfasermembranen den Retentatraum und der Zwischenfaserraum den Filtratraum bilden. Eine derartige Ausgestaltung hat den Vorteil, dass die Rückgewinnung der proteinhaltigen Partikel oder der proteinhaltigen gelösten Substanz einfach und sicher gewährleistet werden kann, insbesondere, weil das Volumen des inneren Lumens des Filtermoduls klein und gut zugänglich und zudem frei oder arm an Totvolumina ist.

In einer weiteren Ausführungsform ist das erfindungsgemäße Verfahren dadurch gekennzeichnet, dass das Fördern von Spülflüssigkeit im zweiten Förderschritt gemäß der ersten Förderrichtung von der zumindest einen Quelle der Spülflüssigkeit in den Filtratraum des Filtermoduls und das Fördern von Spülflüssigkeit gemäß der ersten Förderrichtung von der zumindest einen Quelle der Spülflüssigkeit oder der einen weiteren Quelle einer Spülflüssigkeit in den Retentatraum des Filtermoduls gleichzeitig erfolgen. Das gleichzeitige Fördern der Spülflüssigkeit im zweiten Förderschritt in den Retentatraum und in den Filtratraum bewirkt eine bessere Freispülung der Membranwand von eventuell anhaftenden Proteinpartikeln. Die Rückgewinnung der proteinhaltigen Partikel oder der gelösten proteinhaltigen Substanz wird dadurch erhöht.

In einer weiteren Ausführungsform ist das erfindungsgemäße Verfahren dadurch gekennzeichnet, dass die Flussrate der Spülflüssigkeit im zweiten Förderschritt im Retentatraum und im Filtratraum gleich groß ist. Dadurch kann die Förderung der Spülflüssigkeit in den Retentatraum und die Förderung der Spülflüssigkeit in den Filtratraum im zweiten Förderschritt durch ein Pumpenmittel, z.B. einer peristaltischen Schlauchrollenpumpe, erfolgen. Alternativ kann auch eine Membranpumpe zur Förderung der Spülflüssigkeit in den Retentatraum und den Filtratraum verwendet werden. Weiterhin kann durch das Einstellen einer übereinstimmenden Flussrate der Spülflüssigkeit in Retentatraum und Filtratraum ein definierter transmembraner Übertritt von Spülflüssigkeit vom Filtratraum in den Retentatraum eingestellt werden. Der transmembrane Übertritt von Spülflüssigkeit vom Filtratraum in den Retentatraum wird im Sinne der vorliegenden Anmeldung auch als *"Back-Filtration"* bezeichnet. Die Filtrationsrichtung aus dem ersten Förderschritt wird somit umgekehrt und unterstützt die Freisetzung von anhaftenden Proteinpartikeln an der Membranwand und damit eine hohe Rückgewinnung der proteinhaltigen Partikel oder der gelösten proteinhaltigen Substanz in der Rückspülflüssigkeit.

In einer weiteren Ausführungsform ist das erfindungsgemäße Verfahren dadurch gekennzeichnet, dass das Fördern von Spülflüssigkeit in den Filtratraum und in den Retentatraum wechselseitig pulsierend erfolgt. Hierzu können insbesondere Pumpenmittel verwendet werden, die einen pulsierenden Fluss der geförderten Spülflüssigkeit verursachen. Pulsierende Pumpenmittel sind z.B. peristaltische Schlauchrollenpumpen oder Membranpumpen. Es wird vermutet, dass wenn Spülflüssigkeit im zweiten Förderschritt wechselseitig pulsierend in den Retentatraum und in den Filtratraum gefördert wird, eine turbulente Strömung in dem die proteinhaltigen Partikel oder die gelöste proteinhaltige Substanz zurückhaltenden Retentatraum verursacht wird. Es wird weiterhin vermutet, dass die turbulente Strömung im Retentatraum an der Membranwand oder in den Poren der Membranwand anhaftende proteinhaltige Partikel oder gelöste proteinhaltige Substanz für die Rückgewinnung der proteinhaltigen Partikel oder gelöste proteinhaltige Substanz mobilisiert. Die Rückgewinnung der proteinhaltigen Partikel oder der gelösten proteinhaltigen Substanz in der Rückspülflüssigkeit wird dadurch erhöht.

In einer weiteren Ausführungsform ist das erfindungsgemäße Verfahren dadurch gekennzeichnet, dass der Filtratraum einen weiteren Flüssigkeitszugang aufweist und im zweiten Förderschritt Spülflüssigkeit gemäß der ersten Förderrichtung von der einen oder mehreren Quellen der Spülflüssigkeit über den ersten und den weiteren Flüssigkeitszugang in den Filtratraum gefördert wird. Eine derartige Ausführung ermöglicht eine weiter optimierte Rückgewinnung der proteinhaltigen Partikel oder der gelösten proteinhaltigen Substanz.

In einer weiteren Ausführungsform ist das erfindungsgemäße Verfahren dadurch gekennzeichnet, dass die Hohlfasermembranen einen Cut-off für einen Filter von kleiner 64 kDa ermöglicht. Ein Filtermodul, enthaltend eine Membran mit einem derartigen Cut-off, ist besonders geeignet, gelöstes Albumin anzureichern. Albumin ist ein besonders ernährungsrelevantes Protein. Es kann auch vorteilhaft sein, ein derartiges Filtermodul für die Behandlung einer Zellsuspension vorzusehen, insbesondere einer Bakteriensuspension. Durch den für diese Anwendung sehr niedrigen Cut-off ist eine sichere und gute Abtrennung bei einer besonders hohen Rückgewinnungsrate gewährleistet. Der Cut-off eines Filters wird nach EN ISO 8637:2014 mit Hilfe der Siebkoeffizientenmessung bestimmt. Dabei ist im Rahmen dieser Anmeldung der Cut-off so zu verstehen, dass ein Siebkoeffizient von 0,01 für Albumin (64kDa) erzielt wird.

In einer weiteren Ausführungsform ist das erfindungsgemäße Verfahren dadurch gekennzeichnet, dass die Proteinsuspension in dem ersten Förderschritt mit einer Flussrate von mindestens 200 ml/min, bevorzugt mindestens 250 ml/min, bevorzugt mindestens 300 ml/min, bevorzugt mindestens 350 ml/min, bevorzugt mindestens 400 ml/min, bevorzugt mindestens 450 ml/min und weniger als 700 ml/min, bevorzugt weniger als 650 ml/min, bevorzugt weniger als 600 ml/min, bevorzugt weniger als 550 ml/min, insbesondere zwischen 200 bis 700 ml/min, oder zwischen 250 bis 650 ml/min, oder zwischen 300 bis 600 ml/min, oder zwischen 350 bis 550 ml/min, oder zwischen 400 bis 550 ml/min, oder zwischen 450 bis 550 ml/min in den Retentatraum gefördert wird.

In einer weiteren Ausführungsform ist das erfindungsgemäße Verfahren dadurch gekennzeichnet, dass die Spülflüssigkeit in dem zweiten Förderschritt von der zumindest einen ersten Quelle der Spülflüssigkeit in den Filtratraum des Filtermoduls und die Spülflüssigkeit von der zumindest einen ersten Quelle der Spülflüssigkeit oder einer weiteren Quelle einer Spülflüssigkeit mit einer Flussrate von mindestens 100 ml/min, bevorzugt 125 ml/min, und weniger als 200 ml/min, bevorzugt 175 ml/min, oder mit einer Flussrate von 150 ml/min in den Retentatraum des Filtermoduls gefördert wird. Durch die Wahl der Flussraten werden besonders günstige Bedingungen zur Verfügung gestellt, insbesondere, wenn Hohlfaserfilter mit einer effektiven Oberfläche von 1,0 bis 2,5 m² verwendet werden. Solche Filter sind kommerziell besonders leicht erhältlich.

In einer weiteren Ausführungsform ist das erfindungsgemäße Verfahren dadurch gekennzeichnet, dass das Filtermodul vor dem ersten Förderschritt mit Spülflüssigkeit gespült wird. In diesem vorgelagerten Spülschritt wird das Filtermodul von Kontaminationen befreit, die ansonsten in der Rückgewinnung der proteinhaltigen Partikel oder der gelösten proteinhaltigen Substanz im zweiten Förderschritt das Ergebnis der rückgewonnenen proteinhaltigen Partikel oder der gelösten proteinhaltigen Substanz verfälschen könnten. Zudem wird die Membran durch den Spülschritt benetzt. Durch die Benetzung kann die Membran Endotoxine in ausreichendem Maße zurückhalten. Für den Spülschritt wird steriles Wasser durch den ersten Flüssigkeitszugang am Filtermodul in den Retentatraum gefördert. Der zweite Flüssigkeitszugang am Retentatraum ist flüssigkeitsdicht blockiert, so dass in den Retentatraum hinzutretendes steriles Wasser über die Membranwand in den Filtratraum übertritt und über den Flüssigkeitszugang am Fitratraum abgeleitet wird. Zur verbesserten Entgasung des Filtermoduls kann vorgesehen sein, Filtratraum und Retentatraum einzeln mit sterilem Wasser zu spülen.

In einer weiteren Ausführungsform ist das erfindungsgemäße Verfahren dadurch gekennzeichnet, dass im Anschluss an den ersten Förderschritt und vor dem zweiten Förderschritt die Flüssigkeitsleitung von der Quelle der proteinhaltigen Suspension oder Lösung zu dem zumindest einen ersten Anschluss am Filtermodul mit Spülflüssigkeit gespült wird, um restliche proteinhaltige Partikel oder gelöste proteinhaltige Substanz aus der Flüssigkeitsleitung in den Retentatraum zu fördern. Das Spülen der proteinhaltigen Partikel oder der gelösten proteinhaltigen Substanz aus den Flüssigkeitsleitungen verbessert die Rückgewinnung.

Ein zweiter Aspekt der Erfindung betrifft die Verwendung des vorab beschriebenen erfindungsgemäßen Verfahrens in der Aufreinigung von proteinhaltigen Suspensionen oder Lösungen, die proteinhaltige Partikel oder gelöste proteinhaltige Substanz in einer Trägerflüssigkeit enthalten. Die im Interesse stehenden proteinhaltigen Suspensionen oder Lösungen können unerwünschte Verunreinigungen enthalten, die eine weitere Verarbeitung durch z.B. Analysemethoden oder Zellkultivierung verhindern. Insbesondere können solche Verunreinigungen in dem ersten Förderschritt durch Filtration an der Membran entfernt werden. Gegebenenfalls kann die filtrierte Trägerflüssigkeit durch eine entsprechende Menge Spülflüssigkeit ersetzt werden, so dass die proteinhaltigen Partikel oder gelöste proteinhaltige Substanz der eingesetzten proteinhaltigen Suspension oder Lösung über die Rückspülflüssigkeit in gereinigter Form erhalten werden können.

In einem dritten Aspekt betrifft die Erfindung die Verwendung des vorab beschriebenen erfindungsgemäßen Verfahrens in der Anreicherung von proteinhaltigen Suspensionen oder Lösungen, die proteinhaltige Partikel oder gelöste proteinhaltige Substanz in einer Trägerflüssigkeit enthalten. Insbesondere ist von Interesse, proteinhaltige Partikel oder gelöste proteinhaltige Substanz in einer Trägerflüssigkeit anzureichern, um sie für weitere Verarbeitungen, z.B. Analysemethoden oder Zellkultivierungen verfügbar zu machen. Insbesondere kann eine Anreicherung der proteinhaltigen Partikel oder der gelösten proteinhaltigen Substanz erfolgen, indem die in dem ersten Förderschritt filtrierte Trägerflüssigkeit durch eine geringere Menge an Spülflüssigkeit im zweiten Förderschritt ausgeglichen wird, so dass die proteinhaltigen Partikel oder die gelöste proteinhaltige Substanz in der Rückspülflüssigkeit stärker konzentriert sind als in der eingesetzten proteinhaltigen Flüssigkeit.

### BESCHREIBUNG DER ERFINDUNG ANHAND DER FIGUREN

Figur 1 zeigt eine Filtrationsanordnung zur Filtration einer proteinhaltigen Suspension oder Lösung an einem Filtermodul gemäß dem ersten Förderschritt des erfindungsgemäßen Verfahrens.
Figur 2 zeigt eine Rückspülanordnung zur Rückspülung von proteinhaltigen Partikeln oder gelöster proteinhaltiger Substanz aus einem Filtermodul gemäß dem zweiten Förderschritt des erfindungsgemäßen Verfahrens.
Figur 3 zeigt eine Rückspülanordnung zur Rückspülung von proteinhaltigen Partikeln oder gelöster proteinhaltiger Substanz aus einem Filtermodul gemäß einem nicht erfindungsgemäßen Verfahren.
Figur 4 zeigt eine Rückspülanordnung zur Rückspülung von proteinhaltigen Partikeln oder gelöster proteinhaltiger Substanz gemäß einem weiteren nicht erfindungsgemäßen Verfahren.

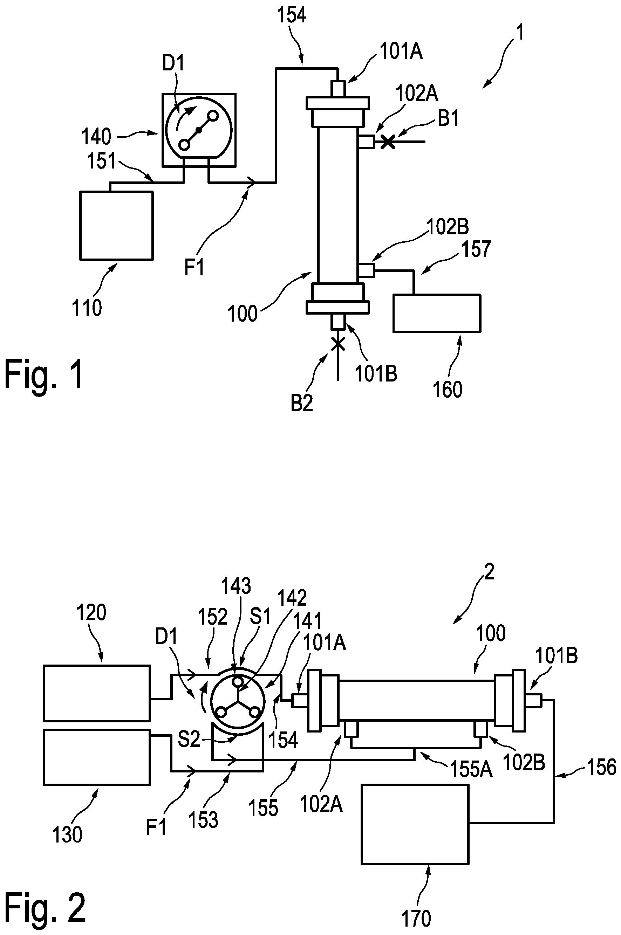

Die in Fig. 1 schematisch gezeigte Filtrationsanordnung 1 zur Filtration einer proteinhaltigen Suspension oder Lösung gemäß dem ersten Förderschritt des erfindungsgemäßen Verfahrens weist ein Filtermodul 100 mit einem in Fig. 1 nicht gezeigten Retentatraum und Filtratraum auf. Die gezeigten Flüssigkeitszugänge 101A und 101B bilden dabei Zugänge zum Retentatraum des Filtermoduls. Die gezeigten Flüssigkeitszugänge 102A und 102B bilden Flüssigkeitszugänge zum Filtratraum. In der gezeigten Darstellung sind der erste Flüssigkeitszugang 102A am Fitratraum und der zweite Flüssigkeitszugang am Retentatraum 101B durch Sperrmittel B1 und B2 flüssigkeitsdicht blockiert. Der erste Flüssigkeitszugang am Retentatraum ist über die Flüssigkeitsleitung 154 mit dem Pumpenmittel 140 verbunden. Als Pumpenmittel ist in schematischer Form eine peristaltische Schlauchrollenpumpe mit zwei Rollen dargestellt. Alternativ gleichwertig für die Filtration gemäß dem ersten Förderschritt kann eine Schlauchrollenpumpe mit drei Rollen, eine Membranpumpe, eine Zahnradpumpe oder beispielsweise eine Impellerpumpe verwendet werden. Derartige Pumpen eignen sich besonders, da die Schädigungen an den proteinhaltigen Partikeln der proteinhaltigen Suspensionen oder Lösungen nicht vorhanden oder gering sind. In der Darstellung wird die Förderrichtung des Pumpenmittels 140 gemäß der Drehrichtung D1 durch einen Pfeil F1 dargestellt. Das Pumpenmittel 140 ist über die Flüssigkeitsleitung 151 mit der Quelle einer proteinhaltigen Suspension oder Lösung 110 verbunden. In der gezeigten Darstellung ist die Quelle ein Behälter, der eine Flüssigkeitsmenge an proteinhaltiger Suspension oder Lösung zur Entnahme bevorratet. Der zweite Flüssigkeitszugang 102B, der am Filtratraum des Filtermoduls 100 anschließt, ist über eine Flüssigkeitsleitung 157 mit einem Behälter 160 verbunden, der dafür vorgesehen ist, das im ersten Förderschritt anfallende Filtrat aufzunehmen.

Fig. 2 zeigt eine schematische Rückspülanordnung 2 zur Rückspülung von Proteinpartikeln aus einem Filtermodul gemäß dem zweiten Förderschritt des erfindungsgemäßen Verfahrens. Fig. 2 zeigt das Filtermodul 100, das nach dem ersten Förderschritt mit Komponenten der Anordnung 2 verbunden wird, um eine Rückspülung des Filtermoduls durch "Forward-Flushing" und "Backward-Filtration" zu bewirken. Fig. 2 zeigt den ersten Flüssigkeitszugang 101A und den zweiten Flüssigkeitszugang 101B, die am Retentatraum des Filtermoduls 100 anschließen. Die gezeigten Flüssigkeitsanschlüsse 102A und 102B schließen am in der Figur nicht gezeigten Filtratraum des Filtermoduls 100 an. Der erste Flüssigkeitszugang am Retentatraum 101A ist über die Flüssigkeitsleitung 154 mit dem Pumpenmittel 141 verbunden. In der gezeigten schematischen Darstellung ist als Pumpenmittel eine peristaltische Schlauchrollenpumpe mit 3 Rollen gezeigt. Weiterhin ist die Schlauchrollenpumpe 141 über die Flüssigkeitsleitung 152 mit einer Quelle einer Spülflüssigkeit 120 verbunden. Als Quelle dient in der gezeigten Darstellung ein Behälter, der eine Flüssigkeitsmenge an Spülflüssigkeit zur weiteren Entnahme bevorratet. Weiterhin ist die Schlauchrollenpumpe 141 über Flüssigkeitsleitungen 153 mit einer weiteren Quelle einer Spülflüssigkeit 130 verbunden. Bei der weiteren Quelle handelt es sich ebenfalls um einen Behälter, der eine Flüssigkeitsmenge an Spülflüssigkeit zur weiteren Entnahme bevorratet. Die Schlauchrollenpumpe 141 wird über die Flüssigkeitsleitung 155 mit den Flüssigkeitszugängen 102A, 102B, die am Filtratraum des Filtemoduls 100 anschließen, verbunden. Die Flüssigkeitsleitung weist eine Verzweigungsstelle 155A auf, in der die in der Flüssigkeitsleitung 155 geführte Spülflüssigkeit zu den Flüssigkeitszugängen 102A und 102B verteilt wird. Die Förderrichtung F1 der Spülflüssigkeit aus den Quellen 120 und 130 erfolgt gemäß der Drehrichtung D1 der verwendeten Schlauchrollenpumpe zum Filtermodul 100. In der gezeigten Darstellung sind die Flüssigkeitsleitungen, die von den Quellen der Spülflüssigkeit 120, 130 zu dem Filtermodul führen, mit einem Pumpenmittel in Verbindung. Dabei stehen zwei Schlauchsegmente S1 und S2 jeweils über die Flüssigkeitsleitungen 152, 153 mit einer Quelle einer Spülflüssigkeit 120, 130 in Verbindung und stehen mit der Schlauchrollenpumpe im Eingriff. Im *"Eingriff'* bedeutet hierbei, dass die Rollen der Schlauchrollenpumpe die Schlauchsegmente S1 und S2 im Sinne einer peristaltischen Förderung komprimieren können und Spülflüssigkeit in Richtung des Filtermoduls 100 verdrängen. Der Rotor 142 der Schlauchrollenpumpe 141 weist 3 Rollen 143 auf. In einer weiteren Ausführungsform kann vorgesehen sein, dass die Schlauchsegmente S1 und S2 und die Rollen 143 der Schlauchrollenpumpe 141 so angeordnet sind, dass beim Betrieb der Pumpe jeweils eine Rolle mit einem der Schlauchsegmente S1 oder S2 im Eingriff steht und die verbleibenden 2 Rollen im Wesentlichen nicht mit den Schlauchsegmenten im Eingriff stehen. In dieser Ausführungsform werden über die Flüssigkeitsleitungen 154 und 155 wechselseitig Druckpulse in Retentatraum und Filtratraum erzeugt, so dass eine verbesserte Rückgewinnung der proteinhaltigen Partikel oder der gelösten proteinhaltigen Substanz erreicht werden kann. Die mit der Spülflüssigkeit am Flüssigkeitszugang 101B austretenden proteinhaltigen Partikel oder die gelöste proteinhaltige Substanz enthaltende Rückspülflüssigkeit wird über die Flüssigkeitsleitung 156 in einem Probenreservoir 170 aufgefangen.

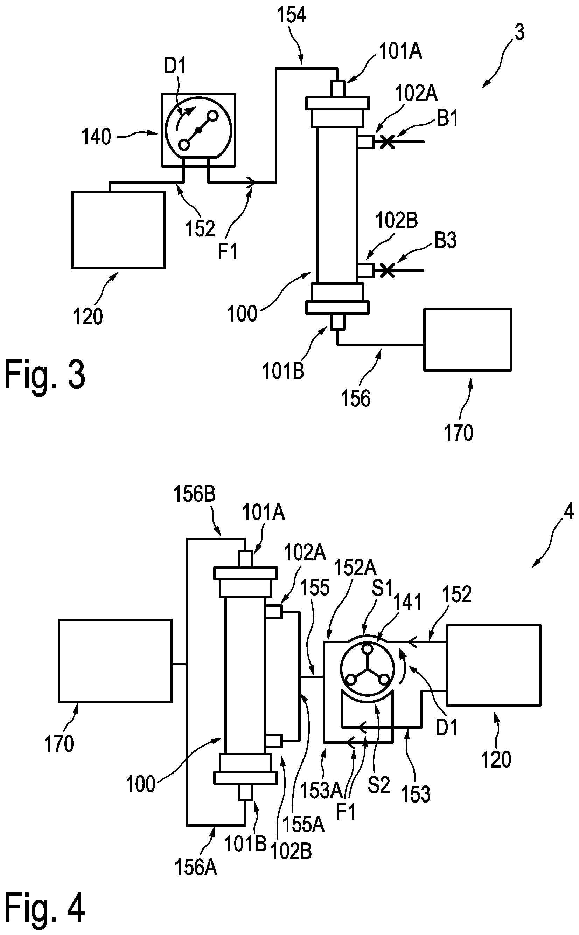

Fig. 3 zeigt in schematischer Darstellung eine Rückspülanordnung 3 zur Rückspülung von proteinhaltigen Partikeln oder gelöster proteinhaltiger Substanz aus einem Filtermodul gemäß einem Förderschritt eines Vergleichsverfahrens. Die Fig. 3 zeigt das Filtermodul 100, das nach dem ersten Förderschritt mit Komponenten der Anordnung 3 verbunden wird, um eine Rückspülung des Filtermoduls durch "Forward-Flushing" zu bewirken. Fig. 3 zeigt weiterhin den ersten Flüssigkeitszugang 101A und den zweiten Flüssigkeitszugang 101B, die am nicht gezeigten Retentatraum des Filtermoduls 100 anschließen. Die gezeigten Flüssigkeitsanschlüsse 102A und 102B schließen am in der Figur nicht gezeigten Filtratraum des Filtermoduls 100 an. Der erste Flüssigkeitszugang am Retentatraum 101A ist über die Flüssigkeitsleitung 154 mit dem Pumpenmittel 140 verbunden. In der gezeigten schematischen Darstellung ist als Pumpenmittel eine peristaltische Schlauchrollenpumpe mit 2 Rollen gezeigt. Weiterhin ist das Pumpenmittel über die Flüssigkeitsleitung 152 mit einer Quelle einer Spülflüssigkeit 120 verbunden. Als Quelle dient in der gezeigten Darstellung ein Behälter, der eine Flüssigkeitsmenge an Spülflüssigkeit zur weiteren Entnahme bevorratet. Die Drehrichtung D1 der Schlauchrollenpumpe fördert dabei Spülflüssigkeit in der Förderrichtung F1 von der Quelle 120 zu dem ersten Flüssigkeitszugang 101A in den Retentatraum des Filtermoduls 100. Die Flüssigkeitszugänge 102A, 102B, die am Filtratraum des Filtermoduls 100 anschließen, sind durch Sperrmittel B1 und B3 flüssigkeitsdicht blockiert. Die mit der Spülflüssigkeit am Flüssigkeitszugang 101B austretende, die proteinhaltigen Partikel oder gelöste proteinhaltige Substanz enthaltende Rückspülflüssigkeit wird über die Flüssigkeitsleitung 156 in einem Probenreservoir 170 aufgefangen.

Fig. 4 zeigt in schematischer Darstellung eine Rückspülanordnung 4 zur Rückspülung von proteinhaltigen Partikeln oder gelöster proteinhaltiger Substanz aus einem Filtermodul 100 gemäß einem Förderschritt eines Vergleichsverfahrens. Die Fig. 4 zeigt das Filtermodul 100, das nach dem ersten Förderschritt mit Komponenten der Anordnung 4 verbunden wird, um eine Rückspülung des Filtermoduls durch "Rückfiltration" zu bewirken. Fig. 4 zeigt weiterhin den ersten Flüssigkeitszugang 101A und den zweiten Flüssigkeitszugang 101B, die am nicht gezeigten Retentatraum des Filtermoduls 100 anschließen. Die gezeigten Flüssigkeitsanschlüsse 102A und 102B schließen am in der Figur nicht gezeigten Filtratraum des Filtermoduls 100 an. In der gezeigten schematischen Darstellung ist als Pumpenmittel 141 eine peristaltische Schlauchrollenpumpe mit 3 Rollen gezeigt. Weiterhin führen Flüssigkeitsleitungen 152 und 153 von der Quelle der Spülflüssigkeit 120 zu den Schlauchsegmenten S1 und S2. Die Schlauchsegmente sind gegenüberliegend an der Schlauchrollenpumpe 141 angelegt. Die Flüssigkeitsleitungen 153 und 152 schließen dabei so an die Schlauchsegmente S1 und S2 an, dass eine Förderung der Spülflüssigkeit im Sinne der Förderrichtung F1 von der Quelle der Spülflüssigkeit zu der Schlauchrollenpumpe und weiter zu dem Filtermodul erfolgen kann. An der Schlauchrollenpumpe 141 schließen die Flüssigkeitsleitungen 152A und 153A an die Schlauchsegmente S1 und S2 an und werden zu einer Flüssigkeitsleitung 155 zusammengeführt. Am Verzweigungspunkt 155A führen zwei Flüssigkeitsleitungen zu jeweils dem ersten Flüssigkeitszugang 102A und dem zweiten Flüssigkeitszugang 102B des Filtermoduls 100, so dass Spülflüssigkeit in den Filtratraum des Filtermoduls gefördert werden kann. Weiterhin weist die Anordnung die Flüssigkeitsleitungen 156A und 156 B auf, die von den Flüssigkeitszugängen 101A und 101B des Filtermoduls zum Probenreservoir 170 führen. Auf diese Weise kann Spülflüssigkeit über Rückfiltration über die Membranwand von dem Filtratraum in den Retentatraum übertreten und als die proteinhaltige Partikel oder gelöste proteinhaltige Substanz enthaltende Rückspülflüssigkeit im Probenreservoir aufgefangen werden.

### BESCHREIBUNG DER ERFINDUNG ANHAND VON BEISPIELEN

### Beispiel 1

Eine proteinhaltige Suspension wurde vorbereitet, indem 8 Liter steril-filtriertes Wasser mit 40 ml einer Bakteriensuspension enthaltend 10⁵ CFU/ml E.coli versetzt wurden. Die Einheit CFU steht für "Colony forming units", somit der Anzahl an lebenden Zellen, die durch bekannte Methode der Zellkultivierung bestimmt werden kann. Eine Filteranordnung nach Fig. 1 wurde vorbereitet, indem die Anordnung mit steril-filtriertem Wasser im "Dead-End"-Verfahren gespült wurde. Als Filtermodul wurde ein Hohlfasermembranfilter der Firma Fresenius Medical Care, Deutschland, vom Typ HF80S verwendet. Der Filter HF80S findet als Dialysator Verwendung in der Nierenersatztherapie und hat eine hohe Permeationsrate für niedermolekulare Substanzen und eine hohe Retentionsrate für Substanzen wie Albumin mit einem Molekulargewicht von 64kDa. Der Cut-off des Filters liegt bei weniger als 64kDa. Das bedeutet, dass gelöste Moleküle mit einem Molekulargewicht wie Albumin oder größer und beispielsweise Bakterien, Zellen und Mikrovesikel sicher zurückgehalten werden. Der Filter weist eine effektive Oberfläche des inneren Lumens der Fasern von 1,8 m² auf. Anschließend wurden die Sperrmittel B1, B2 der Anordnung so geschaltet, dass Filtratraum und Retentatraum jeweils einzeln gespült wurden, bis die gesamte Anordnung flüssigkeitsgefüllt und frei von Lufteinschlüssen vorlag. Anschließend wurde in einer Ausgangsfraktion von ca. 2 Litern der hergestellten E.coli-Suspension die Konzentration der E.coli-Bakterien bestimmt. Danach wurde die Ausgangsfraktion gemäß der in Fig.1 dargestellten Filtrationsanordnung gemäß einer "Dead-End"-Filtration filtriert und das filtrierte Volumen der E.coli-Suspension dokumentiert. Anschließend wurden die zu dem Hohlfasermembranfilter führenden Flüssigkeitsleitungen mit Spülflüssigkeit gespült, um restliche E.coli-Bakterien aus den Leitungen in den Retentatraum des Filters zu fördern. Die Förderung der E.coli-Suspension und der Spülflüssigkeit erfolgte mit einer Flussrate von 500 ml/min.

Die Filtration der E.coli-Suspension wurde an zwei weiteren Hohlfasermembranfiltern des gleichen Typs HF80S unter gleichen Verfahrensbedingungen durchgeführt. Es wurden somit 3 Hohlfasermembranfilter erhalten, die im Retentatraum mit einer ungefähr gleichen Menge an E.coli-Bakterien beladen waren. Das jeweilig filtrierte Volumen der Ausgangsfraktionen, die Konzentration von E.coli-Bakterien in der jeweiligen Ausgangsfraktion und die berechnete Zahl der E.coli-Bakterien, mit der ein jeweiliger Hohlfasermembranfilter beladen wurde, sind in Tabelle 1 dokumentiert.

**Tabelle 1**

| Hohlfasermembranfilter Nummer | Filtriertes Volumen der **Ausgangsfraktion** | Konzentration E.coli in **Ausgangsfraktion** | Zahl E.coli im Hohlfasermembran-filter |
|---|---|---|---|
| 1 | 2143,6 ml | 1,3 × 10³ | 2,49 × 10⁶ |
| 2 | 2070,3 ml | 1,1 × 10³ | 2,79 × 10⁶ |
| 3 | 2077,1 ml | 1,2 × 10³ | 2,28 × 10⁶ |

Die Hohlfasermembranfilter wurden kontaminationsfrei aus der Filtrationsanordnung entnommen und für den Einbau in eine Rückspülanordnung nach Fig. 2 bis 4 verwendet.

### Beispiel 2

Der nach Beispiel 1 mit E.coli beladene Hohlfasermembranfilter mit der Nummer 1 wurde in eine Rückspülanordnung nach Fig. 2 eingebaut. Die Förderrate der Schlauchrollenpumpe, mit der die Spülflüssigkeit in den Retentatraum und den Filtratraum gefördert wurde, betrug 150 ml/min. Da die Schlaurollenpumpe gemäß der Rückspülanordnung mit zwei Schlauchsegmenten im Eingriff stand, betrug die Gesamtförderleistung der dem Filtermodul zugeführten Spülflüssigkeit 300 ml/min. Durch Verwendung eines Schlauchpumpenrotors mit 3 Rollen und zweier Schlauchsegmente erfolgte die Rückspülung über Retentatraum und Filtratraum gleichzeitig, aber mit wechselseitig pulsierenden Druckverhältnissen. Die Rückspülung erfolgte mit einer Lösung, die 0,8 Gew.-% Kochsalz und mit 0,1Gew-% TWEEN 80 enthielt. Die Rückspülung an sich erfolgte in fünf Schritten, wobei für die ersten drei Rückspülschritte eine Spülflüssigkeitsmenge von 100 ml verwendet wurde und für den vierten Rückspülschritt eine Spülflüssigkeitsmenge von 200 ml verwendet wurde. Im Anschluss erfolgte ein finaler Rückspülschritt mit einem Volumen von ca. 200 ml. Die die E.coli-Bakterien enthaltende Rückspülflüssigkeit wurde im Probenreservoir aufgefangen. Die Proben wurden hinsichtlich des genauen Volumens, der Zahl und Konzentration der E.coli-Bakterien sowie der Rückgewinnungsrate analysiert. Die Ergebnisse sind in Tabelle 2 dokumentiert.

### Vergleichbeispiel 1

Der nach Beispiel 1 mit E.coli beladene Hohlfasermembranfilter mit der Nummer 2 wurde in eine Rückspülanordnung nach Fig. 3 eingebaut. Die Förderrate der Schlauchrollenpumpe, mit der die Spülflüssigkeit in den Retentatraum und den Filtratraum gefördert wurde, betrug 300 ml/min. Die Rückspüllösung war eine 0,8 gew.-%ige Kochsalzlösung mit 0,1Gew-% TWEEN 80. Die Rückspülung an sich erfolgte in vier Schritten, wobei für die ersten drei Rückspülschritte eine Spülflüssigkeitsmenge von 100 ml verwendet wurde und für den vierten Rückspülschritt eine Spülflüssigkeitsmenge von 200 ml verwendet wurde. Im Anschluss erfolgte ein finaler Rückspülschritt mit einem Volumen von ca. 200 ml. Die die E.coli-Bakterien enthaltende Rückspülflüssigkeit wurde im Probenreservoir aufgefangen. Im Probenreservoir wurden jeweilige Proben mit einem Volumen von ca. 100 ml und 200 ml, der E.coli-Bakterien enthaltenden Rückspülflüssigkeit aufgefangen. Die Proben wurden hinsichtlich des genauen Volumens, der Zahl und Konzentration der E.coli-Bakterien sowie der Rückgewinnungsrate analysiert. Die Ergebnisse sind in Tabelle 2 dokumentiert

### Vergleichsbeispiel 2

Der nach Beispiel 1 mit E.coli beladene Hohlfasermembranfilter mit der Nummer 3 wurde in eine Rückspülanordnung nach Fig. 4 eingebaut. Die Förderrate der Schlauchrollenpumpe, mit der die Spülflüssigkeit in den Retentatraum und den Filtratraum gefördert wurde, betrug 150 ml/min. Die Rückspüllösung war eine 0,8 gew.-%ige Kochsalzlösung mit 0,1Gew-% TWEEN 80. Da die Schlaurollenpumpe gemäß der Rückspülanordnung mit zwei Schlauchsegmenten im Eingriff stand, betrug die Gesamtförderleistung der zu dem Filtermodul zugeführten Spülflüssigkeit 300 ml/min. Die Rückspülung an sich erfolgte in vier Schritten, wobei für die ersten drei Rückspülschritte eine Spülflüssigkeitsmenge von 100 ml und für den vierten Rückspülschritt eine Spülflüssigkeitsmenge von 200 ml verwendet wurde. Im Anschluss erfolgte ein finaler Rückspülschritt mit einem Volumen von ca. 200 ml. Die die E.coli-Bakterien enthaltende Rückspülflüssigkeit wurde im Probenreservoir aufgefangen. Die Proben wurden hinsichtlich des genauen Volumens, der Zahl und Konzentration der E.coli-Bakterien sowie der Rückgewinnungsrate analysiert. Die Ergebnisse sind in Tabelle 2 dokumentiert.

**Tabelle 2**

| **Beispiel 2** | Probe 1 | Probe 2 | Probe 3 | Probe 4 | finale Probe |
|---|---|---|---|---|---|
| Volumen [ml] | 100,8 | 102,6 | 97,9 | 210,8 | 313 |
| Konzentration E.coli [CFU/ml] | 1 ×10⁴ | 9,1 ×10³ | 1,4 ×10³ | 4,3 ×10² | 0 |
| Zahl E.coli [CFU] | 1,01×10⁶ | 9,34 ×10⁵ | 1,37 ×10⁵ | 9,06 ×10⁴ | 0 |

| **Vergleichsbeispiel 1** | | | | | |
|---|---|---|---|---|---|
| Volumen [ml] | 102,8 | 98 | 111,7 | 214 | 234,5 |
| Konzentration E.coli [CFU/ml] | 3,5×10³ | 7,3 ×10³ | 5,6 ×10³ | 4,8 ×10² | 20 |
| Zahl E.coli [CFU] | 3,6×10⁵ | 7,15 ×10⁵ | 6,26 ×10⁵ | 1,03 ×10³ | 4,69×10³ |

| **Vergleichsbeispiel 2** | | | | | |
|---|---|---|---|---|---|
| Volumen [ml] | 98,6 | 100,1 | 102,1 | 202,9 | 176,3 |
| Konzentration E.coli [CFU/ml] | 7,2 ×10³ | 5,4 ×10³ | 3,4 ×10² | 1,1 ×10³ | 0 |
| Zahl E.coli [CFU] | 7,1 ×10⁵ | 5,41 ×10⁵ | 3,47 ×10⁴ | 2,23 ×10⁵ | 0 |

### Ergebnisse

Die Gesamtzahl der in den Proben 1 bis 4 und der finalen Probe enthaltenen E.coli-Bakterien betrug:

| | |
|---|---|
| Beispiel 2: | 2,17×10⁶ |
| Vergleichsbeispiel 1: | 1,8×10⁶ |
| Vergleichsbeispiel 2: | 1,5×10⁶ |

Die daraus ermittelte Rückgewinnungsrate betrug:

| | |
|---|---|
| Beispiel 2: | 87% |
| Vergleichsbeispiel 1: | 65% |
| Vergleichsbeispiel 2: | 66% |

Die einzelnen Rückgewinnungsraten sind in Tabelle 3 dargestellt.

**Tabelle 3**

| | **Rückgewinnungsraten in %** | | | | |
|---|---|---|---|---|---|
| | **Probe 1** | **Probe 2** | **Probe 3** | **Probe 4** | **finale Probe** |
| **Beispiel 2** | 40,4 | 37,5 | 5,5 | 3,6 | 0 |
| **Vergleichsbeispiel 1** | 12,9 | 25,7 | 22,4 | 3,7 | 0,2 |
| **Vergleichsbeispiel 2** | 31,2 | 23,7 | 1,5 | 9,8 | 0 |

Die Rückgewinnungsraten gemäß der Rückspülung nach Vergleichsbeispiel 1 und Vergleichsbeispiel 2 liegen ungefähr auf gleichem Niveau. Die Rückgewinnungsrate gemäß der Rückspülung nach Beispiel 2 ist deutlich höher. Zudem ist eine vergleichsweise hohe Rückgewinnungsrate schon nach einem geringen Spülvolumen von 200 ml erreicht.

## Patentansprüche

1. Verfahren zur Verarbeitung von proteinhaltigen Suspensionen oder Lösungen umfassend die Schritte:
Bereitstellen eines Filtermoduls (100), aufweisend einen Innenraum, der durch zumindest eine poröse Membranwand in einen Retentatraum und einen Filtratraum unterteilt ist, wobei der Retentatraum zumindest einen ersten Flüssigkeitszugang (101A) und einen zweiten Flüssigkeitszugang (101B) aufweist und der Filtratraum zumindest einen Flüssigkeitszugang (102B) aufweist,
Bereitstellen zumindest einer Quelle einer proteinhaltigen Suspension oder Lösung (110) enthaltend in einer Trägerflüssigkeit suspendierte proteinhaltige Partikel oder gelöste proteinhaltige Substanz, wobei die Quelle der proteinhaltigen Suspension oder Lösung über Flüssigkeitsleitungen (151, 154) zumindest mit dem ersten Flüssigkeitszugang (101A) am Retentatraum verbindbar ist,
Bereitstellen einer oder mehrerer Quellen einer Spülflüssigkeit (120, 130), wobei die eine oder die mehreren Quellen der Spülflüssigkeit (120, 130) zumindest mit dem ersten oder zweiten Flüssigkeitszugang am Retentatraum (101A, 101B) und mit dem zumindest einen Flüssigkeitszugang (102B) am Filtratraum über Flüssigkeitsleitungen (152, 153, 154, 155) verbindbar ist,
Bereitstellen von zumindest einem Pumpenmittel (140, 141) zum Fördern von proteinhaltiger Suspension oder Lösung und Spülflüssigkeit durch die Flüssigkeitsleitungen,
Fördern der proteinhaltigen Suspension oder Lösung in einem ersten Förderschritt von der Quelle der proteinhaltigen Suspension oder Lösung (110) in den Retentatraum des Filtermoduls (100), wobei die Quelle der proteinhaltigen Suspension oder Lösung über Flüssigkeitsleitungen (151, 154) zumindest mit dem ersten Flüssigkeitszugang (101A) am Retentatraum verbunden ist,
Überleiten von Flüssigkeit der proteinhaltigen Suspension oder Lösung über die Membranwand in den Filtratraum,
gegebenenfalls Ableiten der im Filtratraum erhaltenen Flüssigkeit über den zumindest einen Flüssigkeitszugang (102B) des Filtratraums,
wobei in einem zweiten Förderschritt Spülflüssigkeit von der einen oder den mehreren Quellen der Spülflüssigkeit in den Filtratraum und in den Retentatraum gefördert wird und proteinhaltige Partikel oder gelöste proteinhaltige Substanz enthaltende Rückspülflüssigkeit aus dem Retentatraum über den zumindest zweiten Flüssigkeitszugang (101B) abgeleitet wird, wobei die eine oder die mehreren Quellen der Spülflüssigkeit (120, 130) zumindest mit dem ersten oder zweiten Flüssigkeitszugang am Retentatraum (101A) und mit dem zumindest einen Flüssigkeitszugang (102B) am Filtratraum über Flüssigkeitsleitungen (152, 153, 154, 155) verbunden ist und
**dadurch gekennzeichnet, dass**
in dem ersten Förderschritt der zumindest zweite Flüssigkeitszugang (101B) am Retentatraum des Filtermoduls flüssigkeitsdicht blockiert ist.

2. Verfahren nach Anspruch 1, **dadurch gekennzeichnet, dass** es sich bei dem Filtermodul (100) um einen Hohlfasermembranfilter handelt.

3. Verfahren nach Anspruch 2, **dadurch gekennzeichnet, dass** die Lumenseite der Hohlfasermembranen den Retentatraum und der Zwischenfaserraum den Filtratraum bilden.

4. Verfahren nach Anspruch 2 oder 3, **dadurch gekennzeichnet, dass** die Hohlfasermembranen einen molekularen Cut-off von kleiner als 64kDa aufweisen.

5. Verfahren nach wenigstens einem der Ansprüche 1 bis 4, **dadurch gekennzeichnet, dass** das Fördern von Spülflüssigkeit im zweiten Förderschritt von der einen oder den mehreren Quellen der Spülflüssigkeit (120, 130) in den Filtratraum des Filtermoduls und
das Fördern von Spülflüssigkeit von der zumindest einen oder den mehreren Quellen der Spülflüssigkeit in den Retentatraum des Filtermoduls gleichzeitig erfolgen.

6. Verfahren nach einem der Ansprüche 1 bis 5, **dadurch gekennzeichnet, dass** das Fördern von Spülflüssigkeit in den Filtratraum und in den Retentatraum wechselseitig pulsierend erfolgt.

7. Verfahren nach Anspruch 5 oder 6, **dadurch gekennzeichnet, dass** die Flussrate der Spülflüssigkeit im Retentatraum und im Filtratraum gleich groß ist.

8. Verfahren nach wenigstens einem der Ansprüche 1 bis 7, **dadurch gekennzeichnet, dass** der Filtratraum einen weiteren Flüssigkeitszugang (102A) aufweist und im zweiten Förderschritt Spülflüssigkeit von der einen oder den mehreren Quellen der Spülflüssigkeit über den zumindest ersten (102B) und den weiteren Flüssigkeitszugang (102A) in den Filtratraum gefördert wird.

9. Verfahren nach wenigstens einem der Ansprüche 1 bis 8, **dadurch gekennzeichnet, dass** die Spülflüssigkeit in dem zweiten Förderschritt von der zumindest einen oder den mehreren Quellen der Spülflüssigkeit (120, 130) in den Filtratraum des Filtermoduls mit einer Flussrate von mindestens 100 ml/min, bevorzugt mindestens 125 ml/min, und weniger als 200 ml/min, bevorzugt weniger als 175 ml/min gefördert wird
und/oder
dass die Spülflüssigkeit in dem zweiten Förderschritt von der zumindest einen oder den mehreren Quellen der Spülflüssigkeit (120,130) in den Retentatraum des Filtermoduls mit einer Flussrate von mindestens 100 ml/min, bevorzugt mindestens 125 ml/min, und weniger als 200 ml/min, bevorzugt weniger als 175 ml/min gefördert wird.

10. Verfahren nach einem der Ansprüche 1 bis 9, **dadurch gekennzeichnet, dass** das Filtermodul (100) vor dem ersten Förderschritt mit Spülflüssigkeit gespült wird.

11. Verfahren nach einem der Ansprüche 1 bis 10, **dadurch gekennzeichnet, dass** die Flüssigkeitsleitung (151, 154) von der Quelle der proteinhaltigen Suspension oder Lösung (110) zu dem zumindest ersten Anschluss (101A) am Filtermodul zwischen dem ersten Förderschritt und dem zweiten Förderschritt mit Spülflüssigkeit gespült wird, um proteinhaltige Partikel oder gelöste proteinhaltige Substanz aus der Flüssigkeitsleitung in den Filtratraum zu fördern.

12. Verwendung des Verfahrens nach wenigstens einem der Ansprüche 1 bis 11 zur Aufreinigung von proteinhaltigen Partikeln oder gelöster proteinhaltiger Substanz in einer Trägerflüssigkeit.

13. Verwendung des Verfahrens nach wenigstens einem der Ansprüche 1 bis 11 zur Anreicherung von proteinhaltigen Partikeln oder gelöster proteinhaltiger Substanz in einer Trägerflüssigkeit.

## Claims

1. Method for processing protein-containing suspensions or solutions comprising the steps of:
providing a filter module (100) having an interior space divided into a retentate chamber and a filtrate chamber by at least one porous membrane wall, the retentate chamber having at least a first liquid access (101A) and a second liquid access (101B), and the filtrate chamber having at least one liquid access (102B),
providing at least one source of a protein-containing suspension or solution (110) containing protein-containing particles or dissolved protein-containing substance suspended in a carrier liquid, wherein the source of the protein-containing suspension or solution is connectable via liquid lines (151, 154) at least to the first liquid access (101A) at the retentate chamber,
providing one or more sources of a rinsing liquid (120, 130), wherein the one or more sources of the rinsing liquid (120, 130) is connectable at least to the first or second liquid access at the retentate chamber (101A, 101B) and to the at least one liquid access (102B) at the filtrate chamber via liquid lines (152, 153, 154, 155),
providing at least one pump means (140, 141) for conveying protein-containing suspension or solution and rinsing liquid through the liquid lines,
conveying the protein-containing suspension or solution in a first conveying step from the source of protein-containing suspension or solution (110) into the retentate chamber of the filter module (100), wherein the source of protein-containing suspension or solution is connected via liquid lines (151, 154) at least to the first liquid access (101A) at the retentate chamber,
passing liquid of the protein-containing suspension or solution via the membrane wall into the filtrate chamber,
optionally discharging the liquid obtained in the filtrate chamber via the at least one liquid access (102B) of the filtrate chamber,
wherein in a second conveying step, rinsing liquid is conveyed from the one or more sources of the rinsing liquid into the filtrate chamber and into the retentate chamber, and backwashing liquid containing protein-containing particles or dissolved protein-containing substance is discharged from the retentate chamber via the at least second liquid access (101B), wherein the one or more sources of the rinsing liquid (120, 130) are connected at least to the first or second liquid access at the retentate chamber (101A) and to the at least one liquid access (102B) at the filtrate chamber via liquid lines (152, 153, 154, 155), and
**characterized in that**
in the first conveying step, the at least second liquid access (101B) at the retentate chamber of the filter module is blocked in a liquid-tight manner.

2. Method according to claim 1, **characterized in that** the filter module (100) is a hollow fiber membrane filter.

3. Method according to claim 2, **characterized in that** the lumen side of the hollow fiber membranes form the retentate chamber and the interstitial fiber space forms the filtrate chamber.

4. Method according to claim 2 or 3, **characterized in that** the hollow fiber membranes have a molecular cut-off of less than 64kDa.

5. Method according to at least one of claims 1 to 4, **characterized in that** conveying rinsing liquid in the second conveying step from the one or more sources of rinsing liquid (120, 130) into the filtrate chamber of the filter module
and
the conveying of rinsing liquid from the at least one or the plurality of sources of rinsing liquid into the retentate chamber of the filter module are performed simultaneously.

6. Method according to one of the claims 1 to 5, **characterized in that** convyeing rinsing liquid into the filtrate chamber and into the retentate chamber is carried out in an alternating pulsating manner.

7. Method according to claim 5 or 6, **characterized in that** the flow rate of the rinsing liquid in the retentate chamber and in the filtrate chamber is the same.

8. Method according to at least one of claims 1 to 7, **characterized in that** the filtrate chamber has a further liquid access (102A) and, in the second conveying step, rinsing liquid is conveyed from the one or more sources of rinsing liquid via the at least first (102B) and the further liquid access (102A) into the filtrate chamber.

9. Method according to at least one of claims 1 to 8, **characterized in that** in the second conveying step the rinsing liquid is conveyed from the at least one or the plurality of sources of rinsing liquid (120, 130) into the filtrate chamber of the filter module at a flow rate of at least 100 ml/min, preferably at least 125 ml/min, and less than 200 ml/min, preferably less than 175 ml/min
and/or
**in that**, in the second conveying step, the rinsing liquid is conveyed from the at least one or more sources of rinsing liquid (120, 130) into the retentate chamber of the filter module at a flow rate of at least 100 ml/min, preferably at least 125 ml/min, and less than 200 ml/min, preferably less than 175 ml/min.

10. Method according to any one of claims 1 to 9, **characterized in that** the filter module (100) is rinsed with rinsing liquid before the first conveying step.

11. Method according to any one of claims 1 to 10, **characterized in that** the liquid line (151, 154) from the source of the protein-containing suspension or solution (110) to the at least first connection (101A) on the filter module is rinsed with rinsing liquid between the first conveying step and the second conveying step in order to convey protein-containing particles or dissolved protein-containing substance from the liquid line into the filtrate chamber.

12. Use of the method according to at least one of claims 1 to 11 for purifying protein-containing particles or dissolved protein-containing substance in a carrier liquid.

13. Use of the method according to at least one of claims 1 to 11 for enriching protein-containing particles or dissolved protein-containing substance in a carrier liquid.

## Revendications

1. Procédé de traitement de suspensions ou de solutions contenant des protéines, comprenant les étapes consistant à :
fournir un module de filtre (100), présentant une chambre intérieure, qui est subdivisée en une chambre de rétentat et une chambre de filtrat par le biais d'au moins une paroi membranaire poreuse, la chambre de rétentat présentant au moins un premier accès de liquide (101A) et un deuxième accès de liquide (101B) et la chambre de filtrat présentant au moins un accès de liquide (102B),
fournir au moins une source d'une suspension ou solution contenant des protéines (110) comprenant des particules contenant des protéines suspendues ou une substance dissoute contenant des protéines dans un liquide support, la source de suspension ou solution contenant des protéines pouvant être reliée par le biais de conduites de liquides (151, 154) au moins avec le premier accès de liquide (101A) au niveau de la chambre de rétentat,
fournir une ou plusieurs sources d'un liquide de rinçage (120, 130), les une ou plusieurs sources de liquide de rinçage (120, 130) pouvant être reliées au moins avec le premier ou le deuxième accès de liquide au niveau de la chambre de rétentat (101A, 101B) et avec le au moins un accès de liquide (102B) au niveau de la chambre de filtrat par le biais des conduites de liquide (152, 153, 154, 155),
fournir au moins un moyen de pompage (140, 141) pour l'acheminement de la suspension ou solution contenant des protéines et du liquide de rinçage à travers les conduites de liquide,
acheminer la suspension ou solution contenant des protéines au cours d'une première étape d'acheminement depuis la source de la suspension ou solution contenant des protéines (110) dans la chambre de rétentat du module de filtre (100), la source de suspension ou solution contenant des protéines étant reliée par le biais de conduites de liquide (151, 154) au moins avec le premier accès de liquide (101A) au niveau de la chambre de rétentat,
faire passer le liquide de la suspension ou solution contenant des protéines par le biais de la paroi membranaire dans la chambre de filtrat,
le cas échéant évacuer le liquide contenu dans la chambre de filtrat par le biais d'au moins un accès de liquide (102B) de la chambre de filtrat,
du liquide de rinçage étant acheminé, au cours d'une deuxième étape d'acheminement, depuis les une ou plusieurs sources de liquide de rinçage dans la chambre de filtrat et dans la chambre de rétentat et le liquide de rinçage de retour renfermant des particules contenant des protéines ou la substance dissoute contenant des protéines étant évacué hors de la chambre de rétentat par le biais du au moins deuxième accès de liquide (101B), les une ou plusieurs sources du liquide de rinçage (120, 130) étant reliées au moins avec le premier ou le deuxième accès de liquide au niveau de la chambre de rétentat (101A) et avec le au moins un accès de liquide (102B) au niveau de la chambre de filtrat par le biais de conduites de liquide (152, 153, 154, 155) et
**caractérisé en ce que**
au cours de la première étape d'acheminement, le au moins deuxième accès de liquide (101B) est bloqué au niveau de la chambre de rétentat du module de filtre de manière étanche au fluide.

2. Procédé selon la revendication 1, **caractérisé en ce que** le module de filtre (100) est un filtre membranaire à fibres creuses.

3. Procédé selon la revendication 2, **caractérisé en ce que** le côté lumière des membranes à fibres creuses forme la chambre de rétentat et la chambre à fibres intermédiaire forme la chambre de filtrat.

4. Procédé selon la revendication 2 ou 3, **caractérisé en ce que** les membranes à fibres creuses présentent un cut-off moléculaire inférieur à 64 kDa.

5. Procédé selon au moins l'une des revendications 1 à 4, **caractérisé en ce que** l'acheminement du liquide de rinçage au cours de la deuxième étape d'acheminement depuis les une ou plusieurs sources de liquide de rinçage (120, 130) dans la chambre de filtrat du module de filtre
et
l'acheminement du liquide de rinçage depuis au moins les une ou plusieurs sources de liquide de rinçage dans la chambre du rétentat du module de filtre s'effectuent simultanément.

6. Procédé selon l'une des revendications 1 à 5, **caractérisé en ce que** l'acheminement de liquide de rinçage dans la chambre de filtrat et dans la chambre de rétentat s'effectue de manière pulsée alternativement.

7. Procédé selon la revendication 5 ou 6, **caractérisé en ce que** le débit du liquide de rinçage dans la chambre de rétentat et dans la chambre de filtrat est de même grandeur.

8. Procédé selon au moins l'une des revendications 1 à 7, **caractérisé en ce que** la chambre de filtrat présente un autre accès de liquide (102A) et, au cours de la deuxième étape d'acheminement du liquide de rinçage depuis les unes ou plusieurs sources de liquide de rinçage est acheminé dans la chambre de filtrat par le biais du au moins premier (102B) et autre accès de liquide (102A).

9. Procédé selon au moins l'une des revendications 1 à 8, **caractérisé en ce que** le liquide de rinçage au cours de la deuxième étape d'acheminement depuis les au moins une ou plusieurs sources de liquide de rinçage (120, 130) est acheminé dans la chambre de filtrat du module de filtre à un débit d'au moins 100 ml/min, de préférence d'au moins 125 ml/min et inférieur à 200 ml/min, de préférence inférieur à 175 ml/min
et/ou
le liquide de rinçage au cours de la deuxième étape d'acheminement depuis les au moins une ou plusieurs sources de liquide de rinçage (120, 130) est acheminé dans la chambre de rétentat du module de filtre à un débit d'au moins 100 ml/min, de préférence d'au moins 125 ml/min et inférieur à 200 ml/min, de préférence inférieur à 175 ml/min.

10. Procédé selon l'une des revendications 1 à 9, **caractérisé en ce que** le module de filtre (100) est rincé avant la première étape d'acheminement avec du liquide de rinçage.

11. Procédé selon l'une des revendications 1 à 10, **caractérisé en ce que** la conduite de liquide (151, 154) depuis la source de suspension ou solution contenant des protéines (110) jusqu'au moins un premier raccordement (101A) est rincée avec du liquide de rinçage au niveau du module de filtre entre la première étape d'acheminement et la deuxième étape d'acheminement pour acheminer les particules contenant des protéines ou la substance dissoute contenant des protéines hors de la conduite de liquide dans la chambre de filtrat.

12. Utilisation du procédé selon au moins l'une des revendications 1 à 11 pour purifier des particules contenant des protéines ou de la substance dissoute contenant des protéine dans un liquide de support.

13. Utilisation du procédé selon au moins l'une des revendications 1 à 11 pour enrichir des particules contenant des protéines ou de la substance dissoute contenant des protéine dans un liquide de support.
